# EUROPEAN PATENT SPECIFICATION

(11) **EP 2 386 941 B1**
(45) Date of publication and mention of the grant of the patent: **02.08.2017**
(21) Application number: 11157450.5
(22) Date of filing: 09.03.2011
(51) Int. Cl.: G06F 3/0481, G06F 17/30

(54) **Information processing apparatus and method, and program**
Vorrichtung und Verfahren zur Informationsverarbeitung sowie Programm
Appareil et procédé de traitement d'informations et programme

(30) Priority: 14.05.2010 JP 2010111587
(43) Date of publication of application: 16.11.2011
(73) Proprietor: Sony Corporation, Tokyo 108-0075 (JP)
(72) Inventor: Hiraiwa, Kenichiro, Tokyo 108-0075 (JP); Kawasaki, Koichi, Tokyo 108-0075 (JP)
(74) Representative: MFG Patentanwälte Meyer-Wildhagen Meggle-Freund Gerhard PartG mbB

(56) References cited:
- EP-A1- 1 835 383
- EP-A2- 0 422 577
- EP-A2- 1 282 033
- WO-A1-00/75766
- JP-A- 2000 311 039
- US-A1- 2002 059 350
- US-A1- 2002 109 687
- US-A1- 2003 068 088
- US-A1- 2003 214 519
- US-A1- 2004 119 750
- US-A1- 2006 236 238
- US-B1- 6 704 034
- US-B1- 7 075 512

## Description

The present invention relates to information processing apparatus and method, and a program, and more specifically to information processing apparatus and method, and a program which are suitable for use when magnifying text.

Personal computers, mobile phones, electronic book terminals, smart phones, and the like are in widespread use. In many cases, these terminals have a network connection capability, and are configured to allow browsing of Web pages that exist on the network. Mobile phones, for example, typically have a small screen, and when a Web page is displayed on such a relatively small screen, the characters are sometimes too small for easy reading.

In such a case, the characters are usually magnified for display. For example, Japanese Unexamined Patent Application Publication No. 2007-509402 proposes changing the layout of content in accordance with the width of a terminal.

When a Web page is magnified in the display area of a terminal, the entire Web page is magnified, and a part of the magnified Web page is presented to the user. Such form of display can solve the problem of characters being too small for easy reading, because the characters appear larger. However, in some cases, it is not possible to browse the entire page without scrolling. For example, when a predetermined piece of text is magnified, there is a possibility that it may become necessary to operate the scroll bar up/down or to the left/right to read the piece of text. Such scroll bar operation is cumbersome for the user, and thus it is preferable to be able to read text with as little scrolling as possible.

As proposed in Japanese Unexamined Patent Application Publication No. 2007-509402, it is also conceivable to change the layout of content, and display the content in magnified form. Also, it is conceivable to magnify the font size of text within a page. However, such magnification often involves layout changes. Since the layout is broken, there are such possibilities that it may become difficult for the user to grasp the page configuration, and that text and other elements may be displayed in an overlapping fashion, resulting in a decrease in readability.

US-2003/068088-A1 describes a mechanism for magnifying information with contextual information. The user may configure the magnification mechanism to present some contextual information along with the focus being magnified.

US-2003/214519-A1 describes systems, methods and apparatus through which meaningful or semantic portions of displayed visual information are modified in order to improve the visual perception by a user.

US-7075512-B1 describes a method and system for navigating a display screen to search for a desired item of information stored in an electronic device. The electronic device includes a fly over user interface (FOUI) capable of receiving commands from a user to provide a zoom out view of the display screen.

From US 2006/0236238 A1 a portable terminal is known which includes a display section for displaying a document and a control section for performing a control. The control includes dividing an entire display region or a partial display region of the display section into a first display region and a second display region. A document is generated and a character string is extracted from a part of the document displayed on the first display region. The extracted character string is displayed on the second display region.

Also from Patent Abstracts of Japan JP 2000311039 a partial enlargement display device and method are known.

It is desirable to ensure that when magnifying content, the content be magnified in easily readable form without breaking the layout.

### Summary of the Invention

According to a first aspect, the invention provides an information processing apparatus in accordance with independent claim 1. According to a second aspect, the invention provides an information processing method in accordance with independent claim 6. Further aspects of the invention are set forth in the dependent claims, the drawings and the following description.

Embodiments of the invention will now be described with reference to the accompanying drawings, throughout which like parts are referred to by like references, and in which:
Figs. 1A and 1B are diagrams for explaining about magnification of text according to the related art;
Fig. 2 is a diagram for explaining about magnification of text according to the related art;
Fig. 3 is a diagram for explaining about magnification of text according to an embodiment of the present invention;
Figs. 4A and 4B are diagrams for explaining about magnification of text according to an embodiment of the present invention;
Fig. 5 is a diagram for explaining about magnification of text according to an embodiment of the present invention;
Fig. 6 is a diagram showing the configuration of a terminal according to an embodiment of the present invention;
Fig. 7 is a diagram showing functions of a terminal;
Fig. 8 is a diagram for explaining about operation of a terminal;
Fig. 9 is a diagram for explaining about how to calculate the shortest distances;
Figs. 10A and 10B are diagrams for explaining about a text element displayed in the center part of a pop-up window;
Fig. 11 is a diagram for explaining about a blank line; and
Fig. 12 is a diagram for explaining about processing with respect to a blank line.

Hereinbelow, an embodiment of the present invention will be described with reference to the drawings.

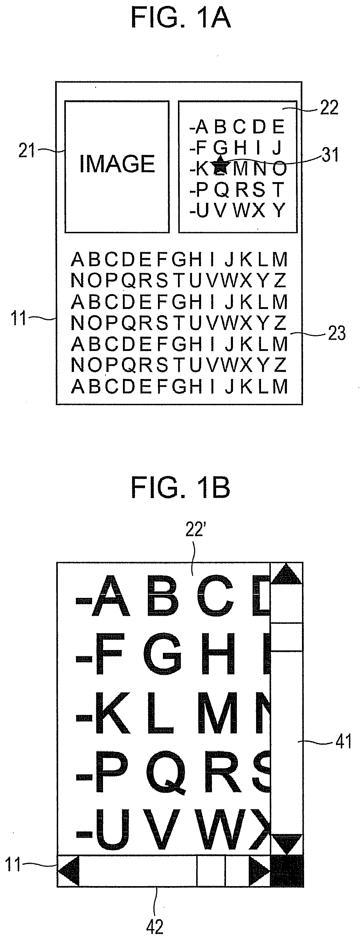

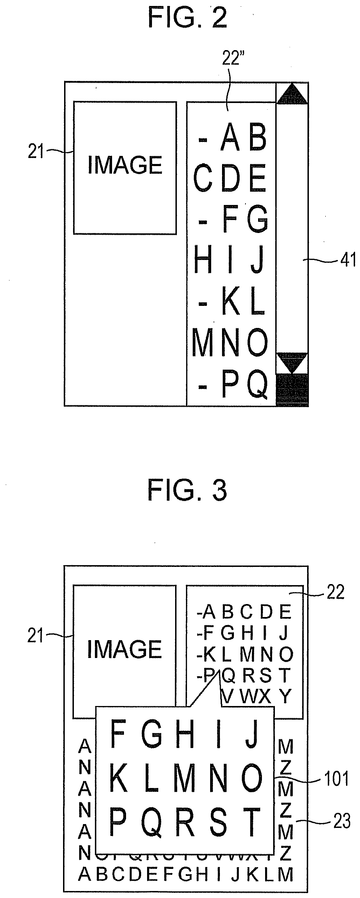

The present invention is applicable when magnifying, for example, a Web page for display on a predetermined terminal. The magnification can be performed in such a way that does not break the page layout or does not make a cumbersome operation such as operation of a scroll bar necessary to read text. With regard to the present invention having such superiority in comparison to magnification according to the related art, in order to clearly illustrate the superiority, and facilitate understanding of an embodiment of the present invention, magnification according to the related art will be described with reference to Figs. 1A and 1B and Fig. 2.

Figs. 1A and 1B are diagrams for explaining about magnification according to the related art. In Fig. 1A, in the display area of a displaying section 11, there are provided an area 21 in which an image is displayed, an area 22 in which text is displayed, and an area 23 in which text is displayed. In this example, the layout is such that the area 21 is provided on the left in the upper side of the display area, the area 22 is provided on the right in the upper side, and the area 23 is provided in the lower side.

In the case when the user instructs to magnify the text being displayed in the area 22 while such a screen is displayed, the screen is switched as shown in Fig. 1B for magnified display. It should be noted that the instruction to magnify text is given by, for example, double-clicking the mouse when the cursor is located over a position 31 indicated by a star mark on the display screen shown in Fig. 1A.

Referring to the example of screen shown in Fig. 1B, the text in the area 22 designated to be magnified is displayed on the displaying section 11 in the state in which the area 22 itself is magnified vertically and horizontally. As the area 22 is magnified, an area 22' of substantially the same size as the display area of the displaying section 11 is provided. The magnified area 22 is denoted by a dash.

In the area 22, the character string "A B C D E" is displayed in a horizontal orientation. As the area 22 is magnified for display, in the area 22', the character string "A B C" and a part of the character "D" are displayed in a horizontal orientation. Thus, because the character "E" becomes unreadable due to the magnification, a horizontal scroll bar 42, which is operated when it is desired to display the character "E", is displayed. Thus, to read the character string "A B C D E", it is necessary for the user to operate the horizontal scroll bar 42.

A vertical scroll bar 41, which is operated when scrolling vertically, is also displayed. Thus, to read characters of a vertically placed character string which are not displayed, it is necessary for the user to operate the vertical scroll bar 41.

As described above, there are cases when the text extends off the display area of the displaying section 11 as a specified part is magnified. In such cases, to browse the text that extends off the display area, it is necessary for the user to operate the vertical scroll bar 41 or the horizontal scroll bar 42. Since such operation is cumbersome for the user, the above-mentioned magnification is undesirable. Moreover, the continuity of the text is not maintained, resulting in disjointed reading of the text. The above-mentioned magnification is undesirable also in this respect.

In this embodiment, magnification is performed without displaying such scroll bars. In other words, magnification is performed in such a way that allows the user to browse a magnified character string without operating a scroll bar or the like, and read text with the continuity of the text maintained.

In the related art, magnification as described with reference to Fig. 2 is also performed. The magnification shown in Fig. 2 represents an example of display when, as in the above-mentioned case, the user instructs to magnify the text in the area 22 on the screen as shown in Fig. 1A. In the example of display shown in Fig. 2, the image displayed in the area 21 is displayed as it is in the same size and position. The magnified area 22 (the area 22 that has been magnified is referred to as area 22") is displayed on the right side of the area 21.

The text in the area 22" shown in Fig. 2 is displayed after having its layout changed so that the text can be read without doing a horizontal scroll. As a result, the character string "A B C D E", which has been displayed horizontally in one line in the area 22, is displayed in two lines in the magnified area 22" such that the character string "A B" appears on the first line, and the character string "C D E" appears on the second line. Such changes are made to the layout. In the case of the magnification shown in Fig. 2, although text can be read continuously by doing a vertical scroll, the layout is broken, and the text sometimes becomes hard to read due to the broken layout.

In the case of the magnification shown in Fig. 1B and the magnification shown in Fig. 2, the layout is changed. That is, in the case of the magnification shown in Fig. 1B, the layout is changed in such a way that the area 21 and the area 23 do not exist and only the area 22' is displayed. Thus, in this case, even if the text displayed in the area 22' is related to the image previously displayed in the area 21, the user is unable to, for example, read the text being displayed in the area 22' while checking the image previously displayed in the area 21.

In the case of the magnification shown in Fig. 2 as well, while it is possible to read the text in the area 22" while checking the image in the area 21, as mentioned above, the layout of the text in the area 22" is changed, which can sometimes render reading difficult.

The magnification shown in Fig. 1B and the magnification shown in Fig. 2 both do not allow the magnified text to be browsed while checking the layout of the original page. Thus, it is not possible for the user to browse the magnified text while checking the overall layout of the page, for example.

According to this embodiment, magnification is performed in such a way that makes it possible to read the magnified text while checking the overall layout. Because the user is able to browse the magnified text while checking the overall layout, for example, the user can read the magnified text while thinking about reading the text in the area 23 after finishing reading the text in the area 22.

### [With regard to magnified display according to an embodiment of the present invention]

Magnification according to an embodiment of the present invention is performed in the manner as shown in Fig. 3. As in the above-mentioned case, the magnified display screen shown in Fig. 3 is a screen displayed when magnification of the text in the area 22 is instructed by the user on the screen as shown in Fig. 1A. The screen shown in Fig. 3 displays a pop-up window 101 while maintaining the display of the areas 21, 22, and 23, that is, while maintaining the layout. The magnified text is displayed in the pop-up window 101.

Reference is now made to Fig. 1A again. In the case of the display shown in Fig. 1A, the position 31 is located within the area 22, over (near) the character string "F G H" and the character string "K L M". Even in this case, in accordance with the magnification described with reference to Fig. 1B and Fig. 2, magnification is started from the character string at the beginning, "A B C D E". However, according to this embodiment, it is judged that the user wants to magnify the location in the vicinity of the character string "F G H", and the pop-up window 101 as shown in Fig. 3 is displayed. That is, within the pop-up window 101, magnified display begins with the character string "F G H I J".

In this way, according to this embodiment, the vicinity of a location designated by the user (area centered at a position designated by the user) is magnified, and thus it is possible to magnify the location desired by the user.

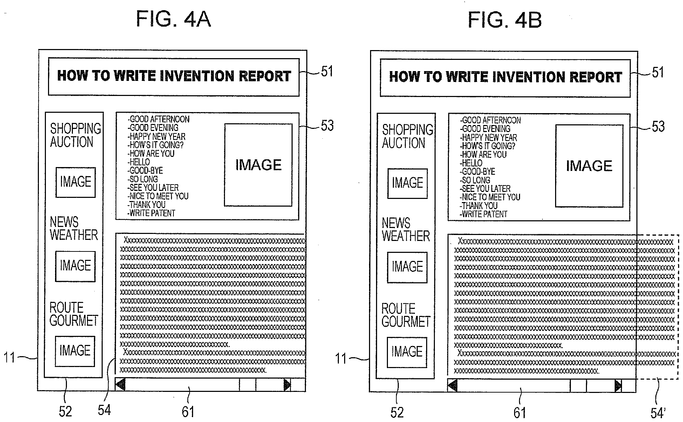

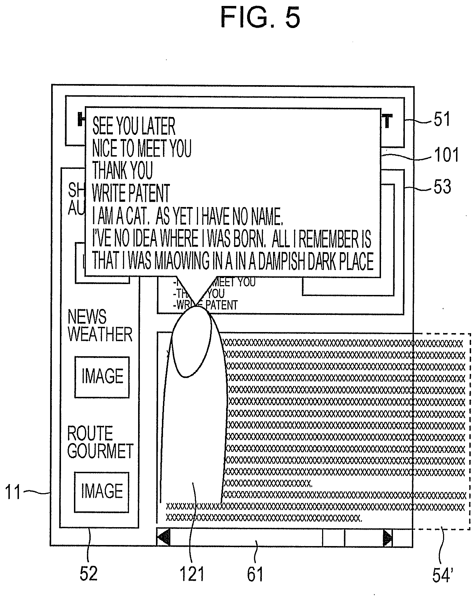

Referring to Figs. 4A and 4B and Fig. 5, a description will be further given of the screen when the magnification according to an embodiment of the present invention is performed. On the screen shown in Fig. 4A, the display section 11 is provided with an area 51 in which a title is displayed, an area 52 in which images and text are displayed in an intermixed manner, an area 53 in which images and text are similarly displayed in an intermixed manner, and an area 54 in which text is displayed.

It should be noted that these areas themselves (squares bounded by lines) are illustrated for the purpose of explanation, and may not necessarily be displayed on a page. Also, what is displayed in each area may be entirely text, of course.

Since the text in the area 54 does not fit in the display area, a horizontal scroll bar 61 is displayed at the lower side of the area 54. That is, as shown in Fig. 4B, the layout of the text in the area 54 is the layout of text in the area 54'. A part of the text in the area 54' (the area on the right side in the drawing) lies off the display area of the displaying section 11, and thus it is possible to display this part of the text. Accordingly, the horizontal scroll bar 61, which is operated when displaying such text, is provided.

In this case, when magnification is instructed by the user, the pop-up window 101 as shown in Fig. 5 is displayed. The example shown in Fig. 5 represents a case in which the displaying section 11 is equipped with a touch panel, and is a device having the function of detecting a position touched by the user. The position touched by the user is located in the lower side in the area 53.

In this case as well, the pop-up window 101 is displayed over the text and images that have been previously displayed before the pop-up window 101 is displayed. That is, the pop-up window 101 is displayed on the screen whose layout has not been changed, in such a way that the screen becomes the background. In still other words, display is done in such a way that the pop-up window 101 is displayed on the screen being displayed at that point in time, without making any changes to the screen.

When display is done in this way, the user is able to see the layout displayed in the background of the pop-up window 101, thus making it possible to see the pop-up window 101 while checking the layout.

The text displayed in the pop-up window 101 is as shown in Fig. 5. That is, in this case, a finger 121 of the user is touching the location of a piece of text in the lower side in the area 53 (the piece of text "WRITE PATENT"). Thus, pieces of text such as "THANK YOU", "NICE TO MEET YOU", and "SEE YOU LATER", which are displayed above the piece of text "WRITE PATENT", are displayed in the pop-up window 101. In addition, the text in the area 54 placed below the area 53 is also displayed in the pop-up window 101.

In this way, the text in the pop-up window 101 can be also displayed so as to extend across a plurality of areas. Further, text that lies within the pop-up window 101 and has been displayed in the area 54 is displayed in such a way that allows the user to read the text continuously without doing an operation such as scrolling. That is, text is folded over for display in accordance with the width of the pop-up window 101 so that the text in the area 54' shown in Fig. 4B can be read without processing such as scrolling.

### [With regard to the terminal configuration]

Next, a terminal that implements such magnified display will be described. An embodiment of the present invention is applied to terminals such as a personal computer, a mobile phone, an electronic book terminal, or a smart phone. Here, the description is continued with a personal computer as an example.

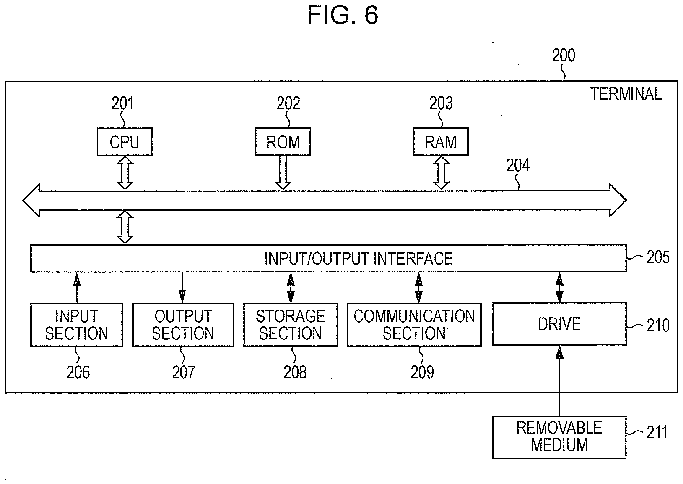

Fig. 6 is a diagram showing the configuration of a terminal according to an embodiment of the present invention. A terminal 200 is configured in such a way that a CPU (Center Processing Unit) 201, a ROM (Read Only Memory) 202, and a RAM (Random Access Memory) 203 are connected to each other via a bus 204. The bus 204 is further connected with an input/output interface 205. The input/output interface 205 is connected with an input section 206, an output section 207, a storage section 208, a communication section 209, and a drive 210.

The input section 206 is formed by a keyboard, a mouse, a microphone, or the like. The output section 207 is formed by a display, a speaker, or the like. The storage section 208 is formed by a hard disk, a non-volatile memory, or the like. The communication section 209 is formed by a network interface or the like. The drive 210 drives a removable medium 211 such as a magnetic disc, an optical disc, a magneto-optical disc, or a semiconductor memory.

In the computer configured as described above, the above-mentioned series of processes is performed when the CPU 201 loads a program stored in the storage section 208 into the RAM 203 via the input/output interface 205 and the bus 204, and executes the program, for example.

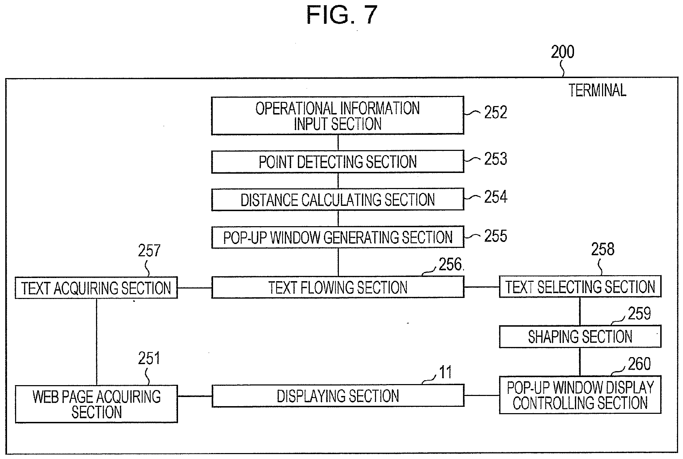

Fig. 7 is a functional block diagram showing functions of the terminal 200. The terminal 200 includes the displaying section 11, a Web page acquiring section 251, an operational information input section 252, a point detecting section 253, a distance calculating section 254, a pop-up window generating section 255, a text flowing section 256, a text acquiring section 257, a text selecting section 258, a shaping section 259, and a pop-up window display controlling section 260.

As described above, the displaying section 11 includes, for example, a display that displays images and text. The Web page acquiring section 251 is a function that connects to a network, and acquires a Web page from the connected site. The operational information input section 252 is a function that inputs information related to an operation made by the user.

The point detecting section 253 is a function that detects a point (the coordinates of the point) designated by the user to be magnified. The distance calculating section 254 is a function that calculates the distances between the point designated by the user to be magnified, and individual text elements on the Web page. The pop-up window generating section 255 is a function that generates a pop-up window. The text flowing section 256 is a function that flows text into the generated pop-up window, in other words, makes a setting such that text is displayed in the pop-up window.

The text acquiring section 257 is a function that acquires a text element designated by the user to be magnified, from the Web page acquired by the Web page acquiring section 251. The text selecting section 258 is a function that selects a text element to be displayed in the pop-up window. The shaping section 259 is a function that executes the process of shaping the text to be displayed in the pop-up window so that, for example, there will be no blank lines or the like. The pop-up window display controlling section 260 is a function that causes the displaying section 11 to display the pop-up window.

It is supposed that a Web page contains a plurality of text elements, and each text element contains a plurality of characters. A text element is, for example, a set of characters grouped together into a predetermined unit, such as a single sentence.

### [With regard to processing of the terminal]

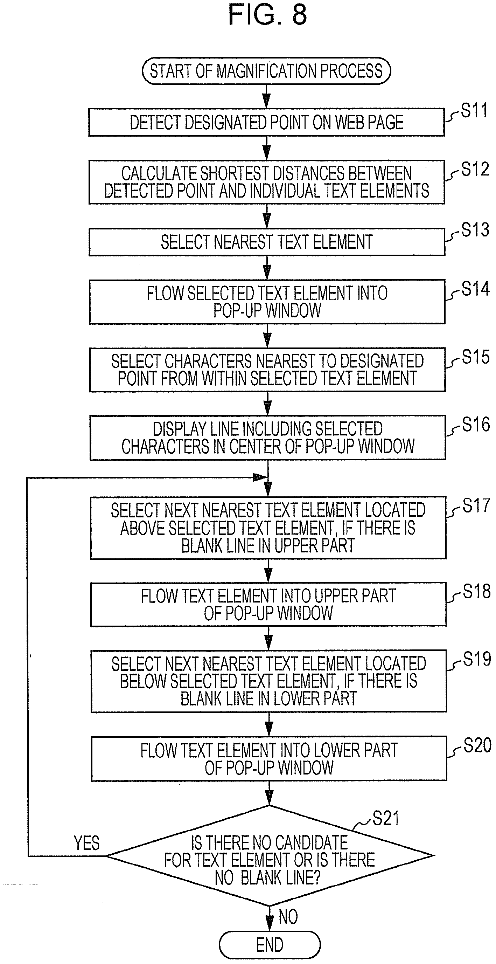

Referring to the flowchart in Fig. 8, a description will be given of processing executed by the terminal 200, in particular, processing executed at the time of magnifying text. In step S11, a position (point) designated by the user to be magnified is detected. For example, a point (its coordinates) at which the cursor is located is detected. Alternatively, the position of a point touched by the user is detected.

The user instructs magnification by, for example, executing a predetermined operation such as positioning the cursor over a piece of text to be magnified, and then double-clicking the mouse that forms the input section 206. Alternatively, in the case of the input section 206 equipped with a touch panel, the user instructs magnification by, for example, executing an operation previously defined as an operation for instructing magnification, such as double-tapping on the piece of text to be magnified, or doing a long press for a predetermined time or more.

When information related to such a user operation is acquired by the operational information input section 252, the point detecting section 253 recognizes the kind of the operation from the information. If the operation is judged to be of a kind that instructs magnification, the point detecting section 253 detects the coordinates at which the cursor is located at that point in time, or the coordinates of a point touched by the user. In this way, a position designated by the user is detected. This position is a single point on the Web page being displayed on the displaying section 11 at that point in time.

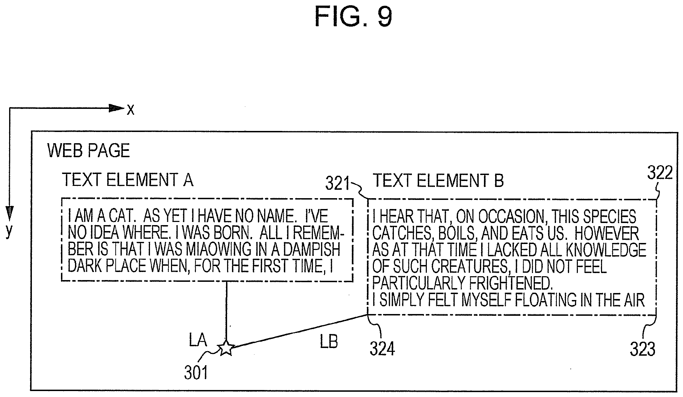

In step S12, the shortest distances between the detected point and individual text elements are calculated by the distance calculating section 254. The calculated distances are stored in a list. This distance calculation process executed in step S12 will be described with reference to Fig. 9. Fig. 9 shows an example of a Web page displayed on the displaying section 11. On the Web page shown in Fig. 9, a text element A and a text element B are displayed. In Fig. 9, the horizontal direction in the drawing is taken as the x-axis direction, and the vertical direction in the drawing is taken as the y-axis direction.

The position indicated by the star mark is a point 301 designated by the user to be magnified. While Fig. 9 shows the point 301 as being located in an area different from the text element A and the text element B, for example, it is the piece of text such as the text element A that is designated by the user to be magnified, and in actuality, the point 301 often exists within the text element A. Also, the configuration is such that it is also possible to handle cases where user's designation is ambiguous, that is, it is also possible to handle cases where, as shown in Fig. 9, the point 301 exists in an area different from the text element A and the text element B (area where no text exists).

As the process in step S11, this position of the point 301 is detected by the point detecting section 253. The shortest distance between the point 301 and the text element A (herein referred to as shortest distance LA), and the shortest distance between the point 301 and the text element B (herein referred to as shortest distance LB) are calculated by the distance calculating section 254 in step S12. In the case of a text element that lies on a straight line parallel to the x-axis or the y-axis with respect to the point 301, the shortest distance is calculated for a straight line that is parallel to the axis and connects between the point 301 and the text element.

For example, in the case of the display example shown in Fig. 9, with respect to the point 301, the text element A lies on a straight line parallel to the y-axis. Thus, the shortest distance LA to the text element A is the distance of a straight line that is parallel to the y-axis and connects between the point 301 and the text element A.

On the other hand, in the case of a text element that is not in such a positional relation, that is, in the case of a text element that does not lie on a straight line parallel to the y-axis with respect to the point 301, the distance to the point within the text element which is nearest to the point 301 is calculated as the shortest distance.

For example, in the case of the display example shown in Fig. 9, the text element B is not located on a straight line parallel to the x-axis direction or the y-axis direction with respect to the point 301. As shown in Fig. 9, in the text element B, points 321, 322, 323, and 324 exist as the points at its corners. Of these, it is the point 324 that is judged to be nearest to the point 301. Hence, in this case, the distance between the point 301 and the point 324 is calculated as the shortest distance LB between the point 301 and the text element B.

While in this example the description is directed to the case of a process performed with respect to two text elements, the shortest distance is to be calculated for all of text elements that exist on the Web page. It should be noted that it is also possible to calculate the shortest distance only with respect to a text element located in close proximity to the point 301. When the shortest distance between a point designated by the user and each individual text element is calculated in this way, the processing proceeds to step S13.

In step S13, the text element nearest to the designated point 301 is selected. Upon calculating the shortest distances, the distance calculating section 254 generates a list that associates text elements with the shortest distances, and references the list to select the text element with the smallest shortest distance. When such a process is executed, a text element located near the position to be magnified designated by the user is selected. When such a selection is made, the processing proceeds to step S14.

In step S14, the selected text element is flown into a pop-up window. First, a pop-up window is generated by the pop-up window generating section 255. The size, shape, and the like of this pop-up window are determined while taking the position of the point 301, the size of the display area of the displaying section 11, and the like into consideration. The pop-up window is generated in the determined size and shape.

It should be noted that the pop-up window to which the text element is flown may be any window having a virtual size. This is because at a subsequent process, the text to be displayed in the actually generated pop-up window is selected from within the text element that has been flown in.

Then, text is flown into the generated pop-up window. The text acquiring section 257 acquires, from the Web page acquired by the Web page acquiring section 251 (the Web page displayed on the displaying section 11), the text element whose distance to the point 301 is judged to be shortest by the distance calculating section 254. The text flowing section 256 flows the text element acquired by the text acquiring section 257 into the pop-up window generated by the pop-up window generating section 255.

For example, in the case when the screen as shown in Fig. 4A is being displayed on the displaying section 11, and the text element judged to be nearest to a point designated by the user is the text element displayed in the area 54, the text element displayed in the area 54, which in this case is the text element to be actually acquired, is the text element included in the area 54' including an area that is not fully displayed.

The amount of text element included in the area 54' is such that the text element does not fit in the pop-up window. The processes from step S15 onwards are performed to allow for such a situation where a text element that does not fit in a pop-up window has been acquired.

In step S15, the characters nearest to the designated point are selected from within the selected text element (the text element flown into the pop-up window). The text selecting section 258 extracts the characters nearest to the point 301 designated by the user, from within the text element flown into the pop-up window by the text flowing section 256.

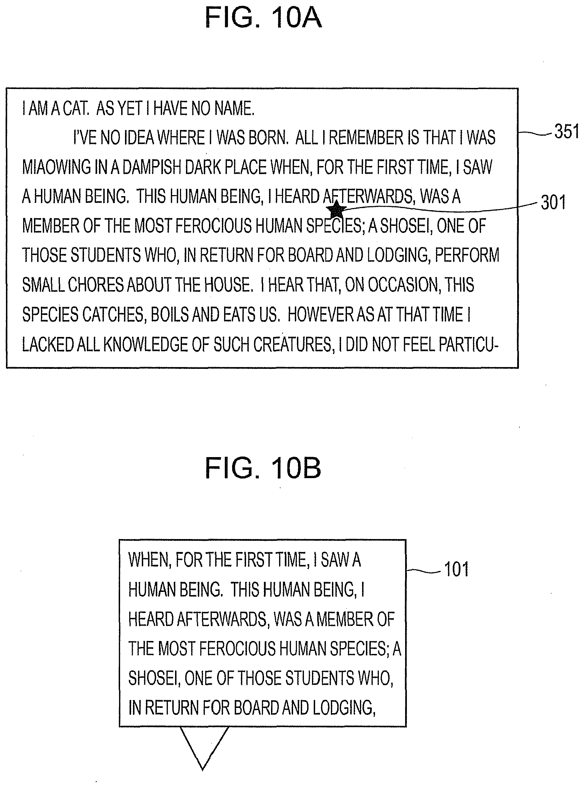

In step S16, a setting is made so that a line (character string) including the extracted characters is displayed at substantially the center of the pop-up window. The processes executed in step S15 and step S16 will be described with reference to Figs. 10A and 10B.

Figs. 10A and 10B each show an example of a text element including a point designated by the user. In the case where, in a text element 351 shown in Fig. 10A, the point designated by the user is the point 301, characters located near the point 301 are the characters "SPECIES". Therefore, in this case, the characters "SPECIES" are selected in step S15 by the text selecting section 258. The line including the characters "SPECIES", that is, the line (character string) "WAS A MEMBER OF THE MOST FEROCIOUS HUMAN SPECIES" in the case of the text shown in Fig. 10A, is extracted.

A setting is made so that this line (character string) is displayed in substantially the center part of the pop-up window. That is, referring to Fig. 10B, in the process in step S16, a setting is made by the text selecting section 258 so that the character string "WAS A MEMBER OF THE MOST FEROCIOUS HUMAN SPECIES" including the characters "SPECIES" is displayed in substantially the center part of the pop-up window 101 that is actually presented to the user.

When the character string to be displayed in substantially the center part within the pop-up window 101 is defined in this way, the processing proceeds to step S17. Through the processes up to step S16, processing has been performed so as to display, in the pop-up widow, the text element that is nearest to the point 301 designated by the user. There is a possibility that, as a result of the processing, a blank space where no text is displayed may exist within the pop-up window 101. The processing from step S17 onwards is executed in order to minimize the presence of such a blank space within the pop-up window 101. Such a process is herein referred to as text element shaping process.

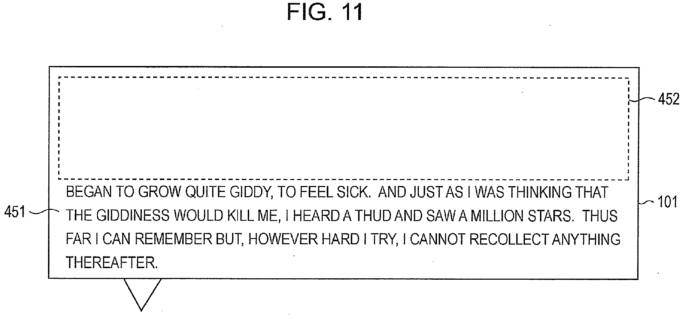

In step S17, the shaping section 259 judges whether or not there is a blank line (blank space) in an upper part of the pop-up window 101. If it is judged that there is a blank line, the shaping section 259 executes a process for filling in the blank line. For example, in the case of the pop-up window 101 as shown in Fig. 11, it is judged that there is a blank line. Referring to Fig. 11, while an area 451 located below the center of the pop-up window 101 is set to display text, an area 452 located above the area 451 is a blank line.

Since a setting has been made through the process in step S16 so that the line including the characters located near the point designated by the user is displayed in the center part in the pop-up window 101, text is displayed at least in the center part of the pop-up window 101. However, with this process for displaying the character string in the center part alone, there remains a possibility that a blank line may occur in the upper side or lower side in the pop-up window 101.

Moreover, although a setting has been made to display text in the center part of the pop-up window 101, unless it is defined to what extent the lines before and after the text (line) are displayed, there is a possibility that text may be displayed only in the center part, and no text is displayed above and below the center part. Accordingly, in the processing from step S17 onwards, a process for eliminating any blank line that exists within the pop-up window 101 is executed.

In step S17, if it is judged that there is a blank line in an upper part in the pop-up window 101, further, a text element to be flown into the upper part is selected. The selection is made by selecting a text element that satisfies the following condition. That is, a text element located above the text element being displayed in the center part in the pop-up window 101 at that point in time on the Web page is selected.

In other words, from within a list of shortest distances, a text element that is located above the text element being displayed in the pop-up window 101, and has the second smallest value of shortest distance with respect to that direction is selected. In still other words, a text element which is located in the same direction in which a blank line exists with respect to the center part in the pop-up window 101, and which is in close proximity to the text element including the character string displayed in the center part is selected.

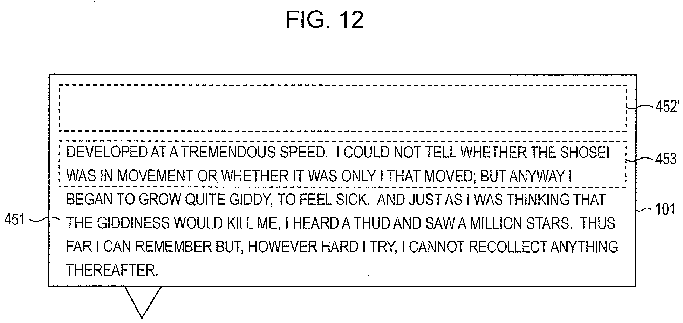

In step S18, the selected text element is flown into the upper part in the pop-up window 101 which is judged to be a blank line. Fig. 12 shows an example of text in the pop-up window 101 into which the text element has been flown. In Fig. 12, the text element has been flown into the portion of an area 453.

As shown in Fig. 12, a blank line still exists in an area 452' in the pop-up window 101. In such a case, it is judged in step S21 described later that there is a blank line. Thus, the processing is returned to step S17, and the subsequent processing is repeated, so that a text element is flown into this blank line (the area 452') as well.

Through the processes in step S17 and step S18, with respect to a blank line located above the center part in the pop-up window 101, processing is executed so as to fill in the blank line. Processing with respect to a blank line located below is also executed in the same manner. That is, in step S19, the shaping section 259 judges whether or not there is a blank line (blank space) in a lower part of the pop-up window 101, and if it is judged that there is a blank line, the shaping section 259 executes a process for filling in the blank line.

For a blank line that exists in a lower part in the pop-up window 101, a text element that is located below the text element being displayed in the center part in the pop-up window 101 at that point in time on the Web page is selected. In other words, from within a list of shortest distances, a text element that is located below the text element being displayed in the pop-up window 101, and has the second smallest value of shortest distance with respect to that direction is selected.

Then, if such a text element exists, in step S20, the selected text element is flown into the area located in a lower part in the pop-up window 101 and judged to be a blank line.

It should be noted that if it is judged in step S17 that there is no blank line in an upper part in the pop-up window 101, the process in step S18 is omitted, and the processing proceeds to step S19. Likewise, if it is judged in step S19 that there is no blank line in a lower part in the pop-up window 101, the process in step S20 is omitted, and the processing proceeds to step S21.

It is judged in step S21 whether or not there is no more blank line as a result of a text element being flown into a blank line that exists in an upper part or a lower part in the pop-up window 101 in this way. In step S21, it is judged whether or not there is no blank line in the pop-up window 101, and if it is judged that there is a blank line, the processing is returned to step S17, and the subsequent processing is repeated.

It is also judged in step S21 whether or not there is no candidate for text element. If it is judged that there is still a candidate for text element, the processing is returned to step S17, and the subsequent processing is repeated.

On the other hand, if it is judged in step S21 that there is no candidate for text element, or there is no blank line, the processing of the flowchart shown in Fig. 8 is ended. The pop-up window 101 generated in this way is displayed on the displaying section 11 through processing by the pop-up window display controlling section 260.

An example of such a screen is the screen shown in Fig. 5 mentioned above. The display of the screen displayed before the time when the pop-up window 101 is displayed on the displaying section 11 is maintained as it is, and the pop-up window 101 is displayed on the maintained screen.

The pop-up window 101 displayed in this way is closed when deselected by the user. The closing criterion is when, for example, the user double-clicks the mouse or double-taps the touch panel.

As the pop-up window 101 is displayed in this way, it is possible to obtain the effect as described above with reference to Figs. 1A to 5.

When the cursor or finger is moved in the state in which the pop-up window 101 is displayed on the displaying section 11 in this way, in accordance with the position of the cursor or finger, text in the pop-up window 101 is also changed. Thus, the user can change the text in the pop-up window 101 by simply moving the cursor or finger, allowing for continuous reading of text.

This is achieved as a result of the processing in the flowchart shown in Fig. 8 being performed constantly. That is, the processing as mentioned above is performed by detecting the position of the cursor or finger in step S11, and executing processing according to the detection result in step S12 onwards. As a result, the text in the pop-up window 101 is changed in accordance with the position of the cursor or finger.

A further description will be given of the display position of the generated pop-up window 101. As a first display position, the pop-up window 101 is displayed above the position where the cursor or finger is located on the displaying section 11 at all times. The position at which the cursor is located, or the position at which the finger is located refers to the position of the point 301 designated by the user to be magnified.

As a second display position, the pop-up window 101 is displayed in such a way that the location of the pop-up window 101 is changed while the magnifying range is changed. For example, the display area of the displaying section 11 is vertically divided in two, and if the cursor or finger (the point designated by the user to be magnified) is located in the upper area, the pop-up window 101 is displayed in the lower area. If the cursor or finger (the point designated by the user to be magnified) is located in the lower area, the pop-up window 101 is displayed in the upper area.

As a third display position, the pop-up window 101 is displayed in the least occupied area of the display area of the displaying section 11. This third display position represents the most effective display particularly in the case of the terminal 200 equipped with a touch panel. Referring to Fig. 5 again, the user designates a position to be magnified by touching the displaying section 11 equipped with a touch panel with the finger 121. In the case shown in Fig. 5, it is not possible to browse a part of the area 54' due to the finger 121. Provided that the pop-up window 101 is displayed under the finger 121 like the area 54', and it is not possible to browse the pop-up window 101, as a result, it is not possible for the user to read the magnified text.

To prevent this, the pop-up window 101 is displayed in such an area on the displaying section 11 that is not hidden by the finger 121. To enable such display, the area being hidden by the finger 121 is detected, and the pop-up window 101 is displayed in an area other than that area. Detection of the area hidden by the finger 121 can be done by, for example, detecting the shadow of the finger 121.

As shown in Fig. 5, in many cases, the finger 121 is located in the direction toward the lower side in the drawing from the designated point to be magnified, that is, along the vertical direction of the displaying section 11 and on the side below the designated point to be magnified. Accordingly, a straight line that extends vertically from the designated point to be magnified, and is located on the side below the designated point to be magnified is defined, and an area of a predetermined width centered on the straight line is defined. The area defined in this way may be processed as being the part of the shadow of the finger 121. That is, the pop-up window 101 is displayed in such a way as to avoid the area that has been defined in this way.

Since the pop-up window 101 as described above is displayed, it is unnecessary for the user to scroll pages to read the magnified text, allowing easy reading of text. Moreover, since the magnified version of the text is displayed in the pop-up window 101, no changes are made to the page layout, thereby preventing the page configuration from becoming hard to understand.

Furthermore, since the pop-up window 101 is displayed above a location selected by the user, the user can recognize the location being currently selected at all times. This allows the user to magnify and read a desired piece of text while recognizing the entire Web page.

### [With regard to a recording medium]

The series of processes described above can be either executed by hardware or executed by software. If the series of processes is to be executed by software, a program constituting the software is installed into a computer. Here, examples of such a computer include a computer embedded in dedicated hardware, and a general-purpose personal computer that can execute various kinds of function when installed with various kinds of program.

The program executed by the terminal 200 (CPU 201) can be provided by being recorded on the removable medium 211 that is a packaged medium or the like, for example. Also, the program can be provided via a wired or wireless transmission medium such as a local area network, the Internet, or digital satellite broadcast.

In the computer, the program can be installed into the storage section 208 via the input/output interface 205, by inserting the removable medium 211 in the drive 210. Also, the program can be received by the communication section 209 via a wired or wireless transmission medium, and installed into the storage section 208. Alternatively, the program can be pre-installed into the ROM 202 or the storage section 208.

It should be noted that the program executed by the computer may be a program in which processes are performed in a time-series fashion in the order as described in this specification, or may be a program in which processes are performed at necessary timing such as when invoked.

The term system as used in this specification refers to the entirety of an apparatus made up of a plurality of devices.

The present application contains subject matter related to that disclosed in Japanese Priority Patent Application JP 2010-111587 filed in the Japan Patent Office on May 14, 2010.

It should be noted that an embodiment of the present invention is not limited to the above-described embodiment, and various modifications are possible without departing from the scope of the present invention.

## Claims

1. An information processing apparatus (200) comprising:
a displaying section (11) configured to display a page including a plurality of text elements;
a detecting section (253) configured to detect a position (31) designated by a user to be magnified, on the page displayed by the displaying section;
a selecting section (258) configured to select one of the text elements which is located near the position detected by the detecting section;
a placing section (256, 259) configured to place a character string of the text element selected by the selecting section, in a pop-up window (101) so that the character string is displayed in the pop-up window; and
a display controlling section (260) configured to control display so that the pop-up window in which the character string has been placed by the placing section is displayed on the page, **characterized in that** said placing section is further configured to select the next nearest text element located above the selected text element, if there is a blank line in the upper part of the pop-up window, and flow the text element into the upper part of the pop-up window, and to select the next nearest text element located below the selected text element, if there is a blank line in the lower part of the pop-up window, and flow the text element into the lower part of the pop-up window.

2. The information processing apparatus according to Claim 1, wherein the placing section is configured to select a character located at the position from within the text element selected by the selecting section, and to place the character string in the pop-up window so that the character string including the selected character is displayed at substantially the center of the pop-up window.

3. The information processing apparatus according to Claim 1, wherein the display controlling section is configured to control display so that the pop-up window is displayed in an area located above the designated position to be magnified.

4. The information processing apparatus according to Claim 1, wherein:
if the position designated by the user to be magnified is located in an upper area of the displaying section, the display controlling section is configured to control display so that the pop-up window is displayed in a lower area of the displaying section; and
if the designated position to be magnified is located in a lower area of the displaying section, the display controlling section is configured to control display so that the pop-up window is displayed in an upper area of the displaying section.

5. The information processing apparatus according to Claim 1, wherein the display controlling section is configured to detect an area shadowed by a finger (121) of the user on a touch panel provided to the displaying section, and to control display so that the pop-up window is displayed in an area other than the detected area.

6. An information processing method for an information processing apparatus having a displaying section that displays a page including a plurality of text elements, comprising the steps of:
detecting (S11) a position (31) designated by a user to be magnified, on the page displayed by the displaying section;
selecting (S13) one of the text elements which is located near the detected position;
placing (S14) a character string of the selected text element in a pop-up window so that the character string is displayed in the pop-up window; and
controlling the displaying section so that the pop-up window in which the character string has been placed is displayed on the page, **characterized by** judging whether there is a blank line in the pop-up window, and placing in the blank line one of the text elements which is located above or below with respect to the character string, and which is in close proximity to the selected text element including the character string.

7. A program which is readable by a computer for carrying out the method of claim 6.

## Patentansprüche

1. Datenverarbeitungsvorrichtung (200), die Folgendes umfasst:
einen Anzeigeabschnitt (11), der konfiguriert ist, eine Seite anzuzeigen, die mehrere Textelemente enthält;
einen Detektionsabschnitt (253), der konfiguriert ist, auf der durch den Anzeigeabschnitt angezeigten Seite eine Position (31) zu detektieren, die durch einen Anwender bestimmt wurde, um vergrößert zu werden;
einen Auswahlabschnitt (258), der konfiguriert ist, eines der Textelemente auszuwählen, das sich in der Nähe der durch den Detektionsabschnitt detektierten Position befindet;
einen Positionierungsabschnitt (256, 259), der konfiguriert ist, eine Zeichenkette des durch den Auswahlabschnitt ausgewählten Textelements in einem Dialogfenster (101) zu positionieren, so dass die Zeichenkette in dem Dialogfenster angezeigt wird; und
einen Anzeigesteuerabschnitt (260), der konfiguriert ist, die Anzeige so zu steuern, dass das Dialogfenster, in dem die Zeichenkette durch den Positionierungsabschnitt positioniert wird, auf der Seite angezeigt wird, **dadurch gekennzeichnet, dass** der Positionierungsabschnitt ferner konfiguriert ist, das nächste am nächsten liegende Textelement, das sich über dem ausgewählten Textelement befindet, auszuwählen, wenn es eine leere Zeile in dem oberen Teil des Dialogfensters gibt, und das Textelement in den oberen Teil des Dialogfensters zu bewegen und das nächste am nächsten liegende Textelement, das sich unter dem ausgewählten Textelement befindet, auszuwählen, wenn es eine leere Zeile in dem unteren Teil des Dialogfensters gibt und das Textelement in den unteren Teil des Dialogfensters zu bewegen.

2. Datenverarbeitungsvorrichtung nach Anspruch 1, wobei der Positionierungsabschnitt konfiguriert ist, von innerhalb des durch den Auswahlabschnitt ausgewählten Textelements ein Zeichen auszuwählen, das sich an der Position befindet, und die Zeichenkette in dem Dialogfenster so zu positionieren, dass die Zeichenkette, die das ausgewählte Zeichen enthält, im Wesentlichen in der Mitte des Dialogfensters angezeigt wird.

3. Datenverarbeitungsvorrichtung nach Anspruch 1, wobei der Anzeigesteuerabschnitt konfiguriert ist, die Anzeige so zu steuern, dass das Dialogfenster in einem Bereich angezeigt wird, der sich über der Position befindet, die bestimmt wurde, um vergrößert zu werden.

4. Datenverarbeitungsvorrichtung nach Anspruch 1, wobei:
dann, wenn sich die durch den Anwender bestimmte Position, um vergrößert zu werden, in einem oberen Bereich des Anzeigeabschnitts befindet, der Anzeigesteuerabschnitt konfiguriert ist, die Anzeige so zu steuern, dass das Dialogfenster in einem unteren Bereich des Anzeigeabschnitts angezeigt wird; und
dann, wenn sich die bestimmte Position, um vergrößert zu werden, in einem unteren Bereich des Anzeigeabschnitts befindet, der Anzeigesteuerabschnitt konfiguriert ist, die Anzeige so zu steuern, dass das Dialogfenster in einem oberen Bereich des Anzeigeabschnitts angezeigt wird.

5. Datenverarbeitungsvorrichtung nach Anspruch 1, wobei der Anzeigesteuerabschnitt konfiguriert ist, einen Bereich zu detektieren, der durch einen Finger (121) des Anwenders auf einer Berührungstafel, mit der der Anzeigeabschnitt ausgestattet ist, beschattet wird, und die Anzeige so zu steuern, dass das Dialogfenster in einem von dem detektierten Bereich verschiedenen Bereich angezeigt wird.

6. Datenverarbeitungsverfahren für eine Datenverarbeitungsvorrichtung mit einem Anzeigeabschnitt der eine Seite anzeigt, die mehrere Textelemente enthält, das die folgenden Schritte umfasst:
Detektieren (S11) einer Position (31), die durch einen Anwender bestimmt wurde, um vergrößert zu werden, auf der durch den Anzeigeabschnitt angezeigten Seite;
Auswählen (S13) eines der Textelemente, das sich in der Nähe der detektierten Position befindet;
Positionieren (S14) einer Zeichenkette des ausgewählten Textelements in einem Dialogfenster, so dass die Zeichenkette in dem Dialogfenster angezeigt wird; und
Steuern des Anzeigeabschnitts, so dass das Dialogfenster, in dem die Zeichenkette positioniert wird, auf der Seite angezeigt wird, **gekennzeichnet durch** Beurteilen, ob es eine leere Zeile in dem Dialogfenster gibt, und Positionieren in der leeren Zeile eines der Textelemente, das sich in Bezug auf die Zeichenkette darüber oder darunter befindet und das in dichter Nähe zu dem ausgewählten Textelement ist, das die Zeichenkette enthält.

7. Programm, das durch einen Computer lesbar ist und dazu dient, das Verfahren nach Anspruch 6 auszuführen.

## Revendications

1. Appareil de traitement d'informations (200) comprenant :
une section d'affichage (11) configurée pour afficher une page comportant une pluralité d'éléments de texte ;
une section de détection (253) configurée pour détecter une position (31) à agrandir désignée par un utilisateur, sur la page affichée par la section d'affichage ;
une section de sélection (258) configurée pour sélectionner l'un des éléments de texte qui est situé près de la position détectée par la section de détection ;
une section de placement (256, 259) configurée pour placer une chaîne de caractères de l'élément de texte sélectionné par la section de sélection, dans une fenêtre contextuelle (101) de telle sorte que la chaîne de caractères soit affichée dans la fenêtre contextuelle ; et
une section de commande d'afficheur (260) configuré pour commander l'afficheur de telle sorte que la fenêtre contextuelle dans laquelle la chaîne de caractères a été placée par la section de placement soit affichée sur la page, **caractérisé en ce que** ladite section de placement est configurée en outre pour sélectionner l'élément de texte suivant le plus proche situé au-dessus de l'élément de texte sélectionné, s'il existe une ligne vierge dans la partie supérieure de la fenêtre contextuelle, et passer l'élément de texte dans la partie supérieure de la fenêtre contextuelle, et sélectionner l'élément de texte suivant le plus proche situé en dessous de l'élément de texte sélectionné, s'il existe une ligne vierge dans la partie inférieure de la fenêtre contextuelle, et passer l'élément de texte dans la partie inférieure de la fenêtre contextuelle.

2. Appareil de traitement d'informations selon la revendication 1, dans lequel la section de placement est configurée pour sélectionner un caractère situé à la position dans l'élément de texte sélectionné par la section de sélection, et placer la chaîne de caractères dans la fenêtre contextuelle de telle sorte que la chaîne de caractères comportant le caractère sélectionné soit affichée sensiblement au centre de la fenêtre contextuelle.

3. Appareil de traitement d'informations selon la revendication 1, dans lequel la section de commande d'afficheur est configurée pour commander l'afficheur de telle sorte que la fenêtre contextuelle soit affichée dans une zone située au-dessus de la position désignée à agrandir.

4. Appareil de traitement d'informations selon la revendication 1, dans lequel :
si la position à agrandir désignée par l'utilisateur est située dans une zone supérieure de la section d'affichage, la section de commande d'afficheur est configurée pour commander l'afficheur de telle sorte que la fenêtre d'affichage soit affichée dans une partie inférieure de la section d'affichage ; et
si la position à agrandir désignée par l'utilisateur est située dans une zone inférieure de la section d'affichage, la section de commande d'afficheur est configurée pour commander l'afficheur de telle sorte que la fenêtre d'affichage soit affichée dans une partie supérieure de la section d'affichage.

5. Appareil de traitement d'informations selon la revendication 1, dans lequel la section de commande d'afficheur est configurée pour détecter une zone obscurcie par un doigt (121) de l'utilisateur sur un panneau tactile dotant la section d'affichage, et commander l'afficheur de telle sorte que la fenêtre contextuelle soit affichée dans une zone autre que la zone détectée.

6. Procédé de traitement d'informations pour appareil de traitement d'informations doté d'une section d'affichage qui affiche une page comportant une pluralité d'éléments de texte, comprenant les étapes consistant à :
détecter (S11) une position (31) à agrandir désignée par un utilisateur, sur la page affichée par la section d'affichage ;
sélectionner (S13) l'un des éléments de texte qui est situé près de la position détectée ;
placer (S14) une chaîne de caractères de l'élément de texte sélectionné dans une fenêtre contextuelle de telle sorte que la chaîne de caractères soit affichée dans la fenêtre contextuelle ; et
commander la section d'affichage de telle sorte que la fenêtre contextuelle dans laquelle la chaîne de caractères a été placée soit affichée sur la page, **caractérisé par** le jugement qu'il existe ou non une ligne vierge dans la fenêtre contextuelle, et le placement dans la ligne vierge de l'un des éléments de texte qui est situé au dessus ou en dessous de la chaîne de caractères, et qui est intimement proche de l'élément de texte sélectionné comportant la chaîne de caractères.

7. Programme lisible par un ordinateur pour exécuter le procédé selon la revendication 6.
